# EUROPEAN PATENT APPLICATION

(11) **EP 2 148 154 A2**
(43) Date of publication of application: **27.01.2010**
(21) Application number: 09166261.9
(22) Date of filing: 23.07.2009
(51) Int. Cl.: F24J 2/46, F24J 2/52

(54) **Adjustable interlocking solar modules and method of installation**

(30) Priority: 24.07.2008 US 83363 P
(71) Applicant: BP Corporation North America Inc., Warrenville, IL 60555 (US)
(72) Inventor: Placer, Neil V., Warrenville, IL 60555 (US)
(74) Representative: Hamer, Christopher K.

(57) **Abstract**

This invention relates to frame for a solar panel, a solar module, a solar assembly and a method for easy installation of a solar collector to a structure. A support mounts to the structure and a mounting bar attaches to the support. Each frame for holding a solar panel includes tabs that engage the mounting bar or a second frame and includes a self aligning guide. A mounting element receives an anchor to affix the frame to the support. The adjustable interlocking design of this invention allows removal of a solar module without requiring disturbing an adjacent module.

## Description

This application claims the benefit of priority from U.S. Provisional Patent Application No. 61/083,363, filed July 24, 2008, the entirety of which is expressly incorporated herein by reference.

### BACKGROUND

### FIELD OF THE INVENTION

This invention relates to solar modules with adjustable interlocking frames for easy installation and removal of a solar module from a solar assembly without requiring disturbing an adjacent module.

### DISCUSSION OF RELATED ART

Conventional frames for solar modules do not interlock or overlap, but rather abut each other and require mounting hardware or fasteners applied to at least two different sides. Conventional modules require at least four screws per module and often are secured by more. Some known solar modules lack adjustability and do not provide for variation during field installation. Other known solar modules require drilling or sawing during installation to allow changes. Known solar modules, do not allow for staging the modules, but require an installer to position the module and attempt to anchor it, while precariously perched on a pitched roof. Known solar modules require disturbing or at least loosening an adjacent module to allow repair or replacement.

There is a need and a desire for adjustable solar modules with fewer fasteners and easy installation. There is also a need and a desire for solar modules that can be staged during installation and provide easy removal without requiring disturbing an adjacent module.

### SUMMARY

This invention relates to an adjustable interlocking frame for solar modules with easy installation and easy removal, such as with self aligning guides and/or not needing sawing or drilling for installation. This invention also relates to frames for solar panels and solar modules that mount to a structure with a minimum amount of hardware and/or roof penetrations.

These and other aspects of this invention are accomplished at least in part with a frame for mounting a solar panel to a structure. The frame includes a first side with one or more tabs to engage a second frame or a mounting bar, and a second side with at least one mounting element for receiving an anchor to affix the frame to a support on the structure.

This invention also includes a solar module for mounting to a structure. The module includes a solar panel, and a frame enclosing at least a portion of the solar panel. The frame includes a first side and a second side, where the first side has one or more tabs to engage a second solar module or a mounting bar, and the second side has at least one mounting element for receiving an anchor to affix the solar module to a support on the structure.

The invention also includes a solar assembly for mounting to a structure. The assembly includes at least one support for affixing to the structure, a mounting bar affixed to the at least one support, a first solar module with a first side including one or more tabs engaging the mounting bar, and a second side including at least one mounting element for receiving an anchor. The assembly further includes at least one anchor attaching each mounting element of the first solar module to the at least one support.

Also provided is a method of mounting an array of solar modules to a structure. The method includes, attaching at least one support to the structure, attaching a mounting bar to the at least one support, engaging at least one tab from a first side of a first solar module with the mounting bar, attaching a second side of the first solar module to the at least one support by at least one anchor with a mounting element in the second side of the first solar module, engaging at least one tab from a first side of a second solar module with the second side of the first solar module, and attaching a second side of the second solar module to the at least one support by at least one anchor with a mounting element in the second side.

### BRIEF DESCRIPTION OF THE DRAWINGS

The above and other features and aspects of this invention are better understood from the following detailed description taken in view of the drawings wherein:
FIGS. 1 and 1A are views of a solar assembly and a support, according to one example;
FIG. 2 is a partial perspective view of a mounting bar, according to one example;
FIGS. 3 and 3A are views of a frame with tabs, according to one example;
FIG. 4 is a partial perspective view of a solar module, according to one example;
FIG. 5 is a partial perspective view of a solar module, according to one example;
FIG. 6 is a partial perspective view of a first solar module and a second solar module, according to one example;
FIG. 7 is a partial perspective view of opposite the view of FIG. 6, according to one example;
FIG. 8 is a partial perspective view of a solar assembly, according to one example; and
FIG. 9 is a top view of a solar array, according to one example.

### DETAILED DESCRIPTION

This invention relates to an adjustable frame for a solar module having easy installation and allowing removal of an individual module without requiring disturbing an adjacent module, such as using one or more tabs to overlap with an adjacent module. Disturbing includes removing anchors from the adjacent module and/or loosening or changing a physical position of the adjacent module. Easy installation, ease of installation and/or simple installation may include the ability to stage the modules on a roof or structure before attachment into a completed assembly or array. Easy installation may also include a reduced number of anchors to affix each solar module, such as about two. Furthermore, easy installation may include self-aligning modules facilitated by one or more guides or nubs.

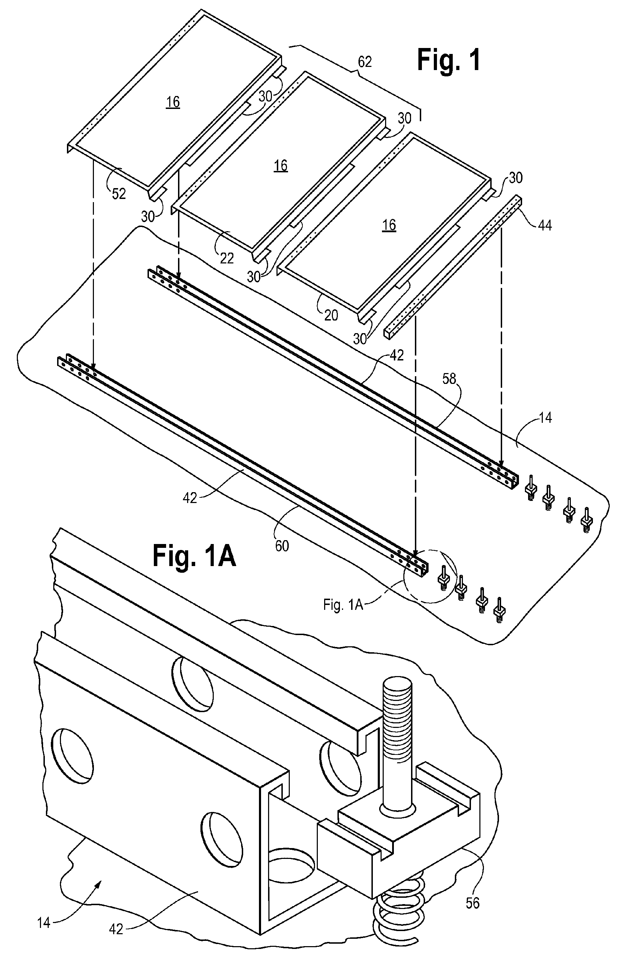

In one example and as shown in FIGS. 1 and 1A, a support 42 can be affixed, anchored, attached and/or secured on or to a structure 14, such as a roof, a building and/or any other suitable location. The support 42 can include any suitable shape, material, number and/or size, for example an adjustable channel form. Any suitable attachment devices (not shown) can be used to mount the support, such as nails, screws, bolts, nuts, washes, rivets and/or fasteners. Desirably, a number of attachment devices is minimized to reduce penetrations through a roofing material and thereby minimize a potential for leakage. Typically, one or more positionable anchors 56 can mount to the support, such as a spring nut or a spring bolt.

In the example, two supports 42 are anchored on a structure 14 in a generally parallel arrangement. The supports can be transverse or parallel to a pitch of a roof, for example. More than one course or row is possible, such as to increase an effective surface area of solar collectors. Desirably, the support 42 includes rails and/or curbs, such as to allow sliding of positionable anchor 56 or other attachment device along a length of the support 42 and provide adjustment. The support 42 can include multiple holes for affixing to the structure 14, such as to allow adjustment.

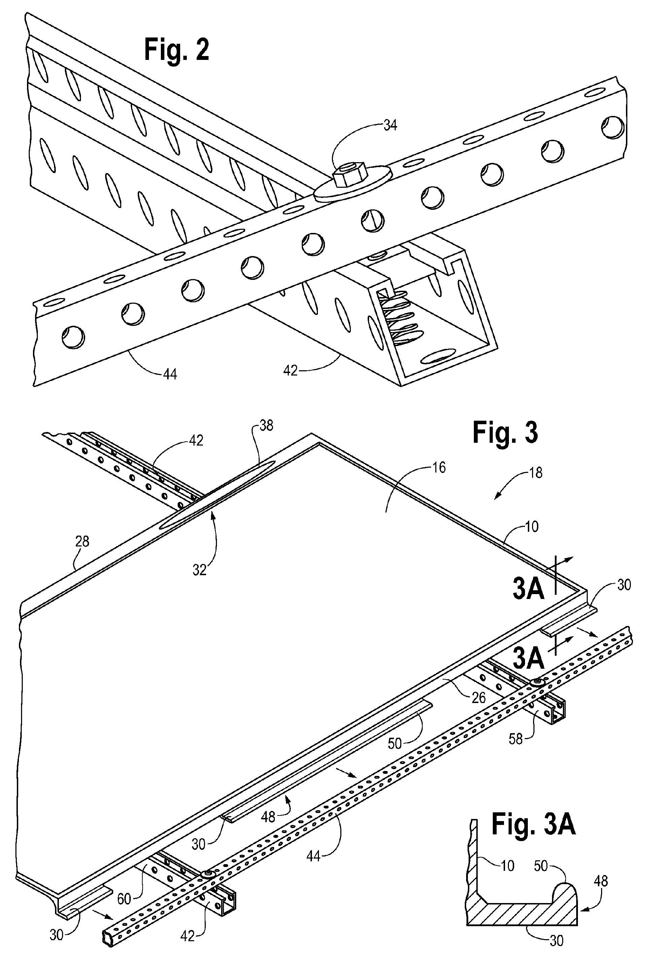

As shown in FIG. 2 and according to the example, a mounting bar 44 can be affixed, anchored, attached and/or secured to the support 42 with one or more anchors 34. Mounting bar 44 may include any suitable shape, material, number and/or size, for example a square perforated form. Any suitable anchors 34 can be used to mount the support, such as bolts, nuts, washes, connectors and/or fasteners. The anchors 34 can be permanent, semi-permanent, temporary and/or removable. Desirably, the anchor 34 mates or combines with the positional anchor 56. Alternately, the anchor 34 includes all the hardware needed for mounting with and/or to the support 42. The mounting bar 44 may include a slot or multiple holes, such as to facilitate mounting, allow compensation and/or provide adjustment for installation. Desirably, but not necessarily, the mounting bar 44 attaches at least generally perpendicular with respect to the support 42.

As shown in FIG. 3 and according to one example, a frame 10 encloses and/or holds at least a portion of a solar panel 16, such as to form a solar module 18. The frame 10 may include any suitable material, such as wood, metal and/or plastic. According to the example, the frame 10 includes a unitary plastic member, such as an injection molded apparatus. Solar panel 16 includes any suitable device for collecting at least a portion of solar radiation, such as having silicon wafers. Desirably, but not necessarily, the frame 10 can be formed from thermoplastic material to encapsulate the solar panel 16, such as by insert molding. Alternately, the frame 10 can be made from one or more discrete members for each side. The frame 10 includes a first side 26 and a second side 28. Desirably, but not necessarily, the first side 26 is at least generally opposite the second side 28. The first side 26 can be at least generally parallel with respect to the second side 28.

The first side 26 may include one or more tabs 30, such as for engaging, overlapping and/or connecting with the mounting bar 44 and/or another frame 10. The term overlapping generally refers to at least a portion of one item being disposed above and/or below at least a portion of a second item. Alternately, tabs 30 may insert into a portion of frame 10. Any suitable number and/or shape of tabs 30 is possible. Tabs 30 may also include a suitable tongue and groove configuration (not shown), such as on a side of the frame 10. Desirably, the tabs 30 provide adjustment, such as by sliding up and down with respect to the mounting bar 44 during installation and/or staging. In one example, the adjustment of the frame 10 is provided at least in part by the spacing between the tabs 30.

According to one example, the first side 26 includes three tabs 30, such as a first tab located on a first end, a second tab located on a middle section and a third tab located on a second end. Desirably, but not necessarily, the tabs 30 receive a first support 58 and a second support 60 therebetween. The first support 58 can affix to the structure generally parallel to a second support 60. As shown in FIG. 3A, the tabs 30 may include a tip 48 opposite the first side 26, such as having a lip 50 to facilitate attachment for the frame 10. The lip 50 generally extends slightly beyond the width of the mounting bar 44 and/or the width of the second side 28 of another frame 10. Desirably, the lip 50 is slightly raised to engage the mating shape.

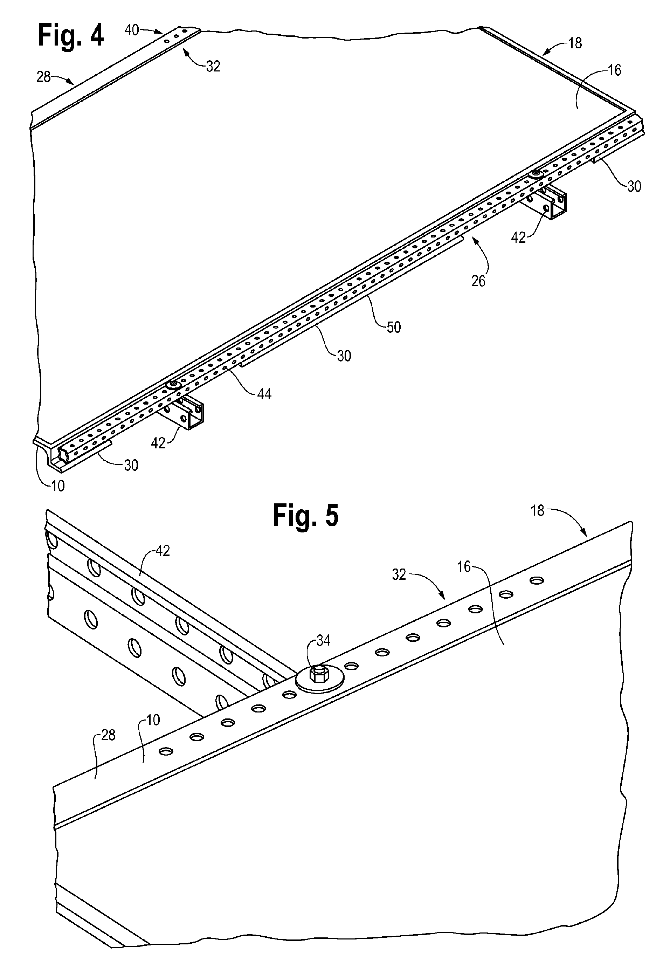

The second side 28 may include one or more mounting elements 32, such as a slot 38 for receiving an anchor 34 (see the description of FIG. 5 below). Any number of mounting elements 32 is possible, such as about two. Desirably, the mounting element 32 in combination with the tabs 30 allows and/or provides for a quick installation of the solar module 18 to the structure 14, such as with no more than two anchors 34 per solar module 18. In other embodiments, any suitable number of anchors 34 can be used to secure the frame 10 to the support 42. The mounting element 32 can provide adjustment, such as from a top to a bottom of the slot 38.

According to one example, the frame 10 mounts to the structure 14 by the support 42 and the anchor 34 without any additional mounting hardware and/or other rails. Specifically one frame 10 abuts and/or directly touches another frame 10. Reduced hardware configurations may provide simpler staging and installation along with a fewer total number of roof penetrations, for example.

As shown in FIG. 4 and according to one example, the tabs 30 on the first side 26 of the frame 10 engage and/or slide under the mounting bar 44. The mounting element 32 may include a plurality of holes 40. FIG. 4 shows the solar module 18 attached to the mounting bar 44, for example.

As shown in FIG. 5 and according to the example, the anchor 34 in combination and/or with respect to the mounting element 32 affixes and/or attaches the second side 28 to the support 42. FIG. 5 shows the affixed second side 28 of the module 18 by the anchor 34.

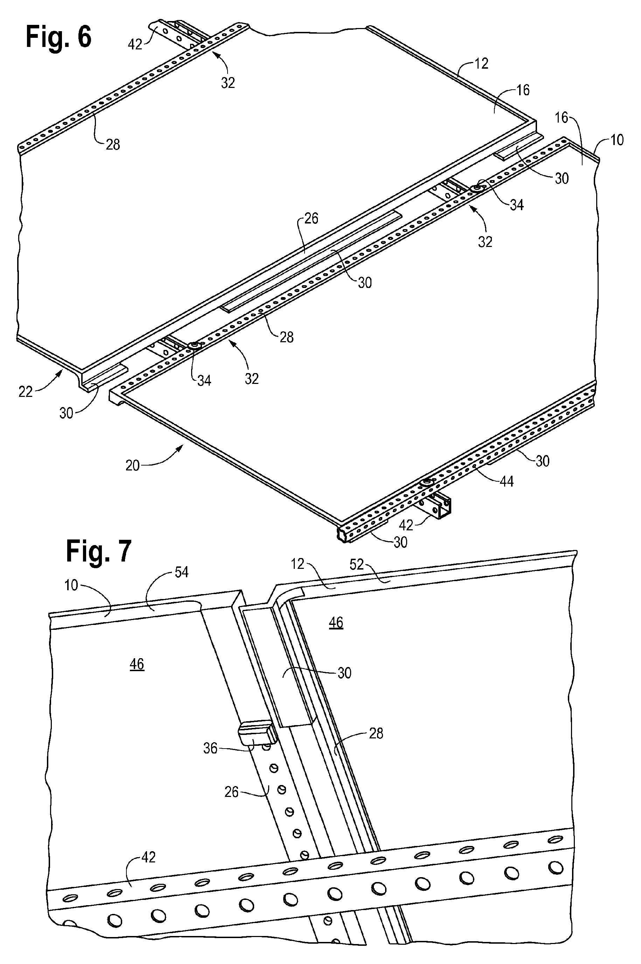

As shown in FIG. 6 and according to the example, a second frame 12 can be staged and or positioned next to and/or adjacent to frame 10, such as from a first solar module 20 and a second solar module 22. Desirably, the tabs 30 of the second solar module 22 can engage and/or overlap with the first solar module 20, such as in a manner corresponding to or similar to the first solar module 20 engaging the mounting bar 44.

As shown in FIG. 7 and according to the example, the bottom and/or underside of the frame 10 and the second frame 12 can engage each other with the assistance of and/or use of guide 36, such as for vertical alignment with respect to each other. Guide 36 may include a bump, protrusion, nub, slot, recess and/or any other suitable configuration to assist installation. Desirably, but not necessarily, the guide 36 is located or positioned on a lower surface 46 of the second frame 12 and helps and/or assists in placing and/or locating the additional solar module 52 with respect to the adjacent solar module 54 by the tabs 30, for example. Other locations for the guide 36 on the frame 10 and/or on the second frame 12 are possible. Additional supports 42 can be added as needed, such as to increase length.

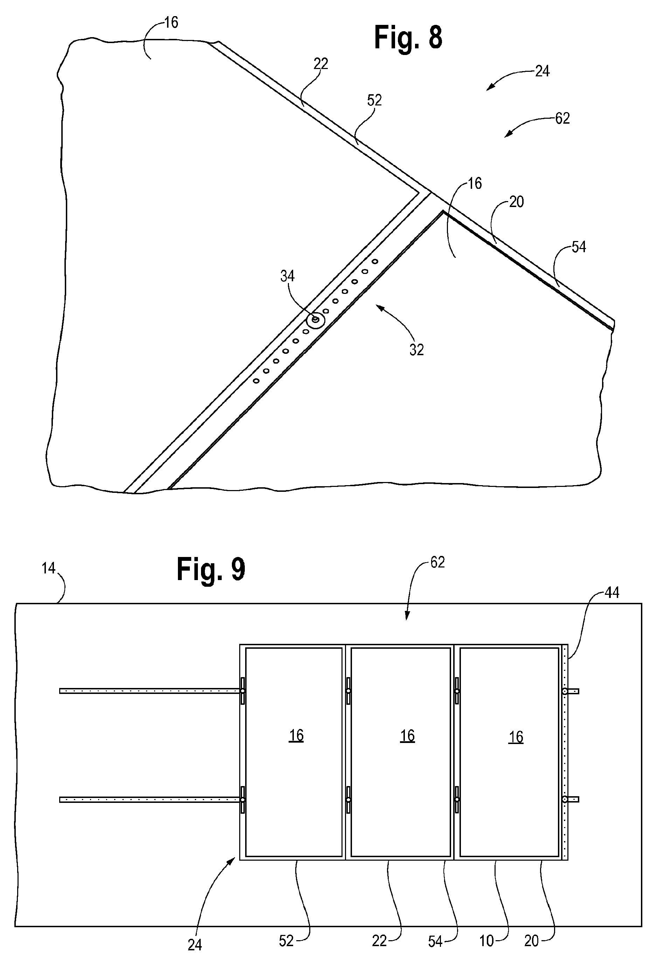

As shown in FIGS. 8-9 and according to the example, the first solar module 20 and the second solar module 22 combine to form a solar assembly 24. Any suitable number of additional solar modules 52 can be added to adjacent solar modules 54, such as to increase an effective solar collection area and form an array 62. The assembly 24 may include multiple rows and/or banks of solar panels 16. One or more electrical connections may be completed to and/or between the solar panels 16 of the assembly 24, such as in series and/or parallel configurations. Alternately, additional mounting bars may be included in solar assembly 24 at any suitable location, such as between every four modules, for example.

According to one example, the invention includes a frame for mounting a solar panel to a structure. The frame has a first side including one or more tabs to engage a second frame or a mounting bar, and a second side including at least one mounting element for receiving an anchor to affix the frame to a support on the structure. The frame may include at least one guide for aligning the second frame with respect to the second side. The mounting element may include a slot or a plurality of holes formed in the second side.

According to another example, the invention includes a solar module for mounting to a structure. The module includes a solar panel and a frame enclosing at least a portion of the solar panel. The frame includes a first side and a second side, where the first side includes one or more tabs to engage a second solar module or a mounting bar, and the second side includes at least one mounting element for receiving an anchor to affix the solar module to a support on the structure.

The module may include at least one guide for aligning the second solar module with respect to the second side. The guide may also assist in staging the solar module during installation, such as by vertically catching the solar module on a support affixed to the structure while installing the modules on a pitched or steeply pitched roof. Desirably, staging modules allows a single installer to work unassisted. Alternately, staging modules allows two installers to work even more quickly. The staging may include connecting the anchors to the support, but remaining loose enough to slide the module into position both horizontally and vertically to engage the guide and simply tighten the anchor, such as with an electric drill, for example.

The first side may include three tabs spaced apart for receiving a first support and a second support alternating therebetween. One or more tabs may project from a lower surface and/or a bottom of the module and include a tip opposite the first side with a lip for securing to the mounting bar or the second solar module. The mounting element may include a slot or a plurality of holes formed in the second side, such as to provide additional adjustment.

In a further example, the invention includes a solar assembly for mounting to a structure. The assembly includes at least one support for affixing to the structure, at least one mounting bar affixed to the at least one support, a first solar module with a first side including one or more tabs engaging the mounting bar, and a second side including at least one mounting element for receiving an anchor. At least one anchor attaches each mounting element of the first solar module to the at least one support.

The solar assembly may include a second solar module with a first side including one or more tabs engaging the second side of the first solar module, and a second side including at least one mounting element for receiving an anchor. At least one anchor attaches each mounting element of the second solar module to the at least one support. The second solar module may include at least one guide aligning the second solar module with respect to the first solar module.

The assembly may further include at least one additional solar module disposed with respect to the second solar module with a first side including one or more tabs engaging a second side of an adjacent solar module, and a second side including at least one mounting element for receiving an anchor. At least one anchor attaches each mounting element of each additional solar module to the at least one support. Each solar module detaches from an adjacent module or the mounting bar and does not require disturbing a position of the adjacent module, according to one embodiment. Each solar module attaches to the at least one support with no more than two anchors, according to one example.

According to one example, this invention includes a method of mounting and/or installing an array of solar modules to a structure. The method includes the steps of attaching at least one support to the structure, attaching at least one mounting bar to the at least one support, engaging at least one tab from a first side of a first solar module with the at least one mounting bar, attaching a second side of the first solar module to the at least one support by at least one anchor with a mounting element in the second side, engaging at least one tab from a first side of a second solar module with the second side of the first solar module, and attaching a second side of the second solar module to the at least one support by at least one anchor with a mounting element in the second side.

The method may further include engaging at least one tab from a first side of at least one additional solar module with a second side of an adjacent solar module and attaching a second side of the at least one additional solar module by at least one anchor with a mounting element in the second side. The method may further include aligning the second solar module with the second side of the first solar module by at least one guide on the second side of the first solar module.

The method may further include staging one or more modules on the at least one support. The staging may include using the guide to engage and/or rest the solar module on a support before being moved in position for attachment to the support. The method may further include removing a solar module without requiring disturbing a position of the adjacent solar module. Removing the module may include loosening or removing the anchors for a selected module, lifting up on the second side of the selected module, and sliding the first side of the selected module away from the adjacent module or the mounting bar. The method may further include electrically connecting the each solar module, to each other, a battery, a distribution system and/or any other suitable mechanism for current flow.

The order of steps recited above and/or in the claims may be preferred and/or helpful, but should not be construed as limiting and/or requiring a sequence of steps and/or frequency.

While in the foregoing specification this invention has been described in relation to certain preferred examples and embodiments, and many details are set forth for purpose of illustration, it will be apparent to those skilled in the art that this invention is susceptible to additional embodiments and that certain of the details described in this specification and in the claims can be varied considerably without departing from the basic principles of this invention.

## Claims

1. A frame for mounting a solar panel to a structure, the frame comprising:
a first side comprising one or more tabs to engage a second frame or a mounting bar; and
a second side comprising at least one mounting element for receiving an anchor to affix the frame to a support on the structure.

2. The frame of claim 1, further comprising at least one guide for aligning the second frame with respect to the second side.

3. The frame of claim 1, wherein the mounting element comprises a slot or a plurality of holes formed in the second side.

4. A solar module for mounting to a structure, the module comprising:
a solar panel; and
a frame enclosing at least a portion of the solar panel, the frame comprising a first side and a second side, the first side comprising one or more tabs to engage a second solar module or a mounting bar, the second side comprising at least one mounting element for receiving an anchor to affix the solar module to a support on the structure.

5. The module of claim 4, further comprising at least one guide for aligning the second solar module with respect to the second side.

6. The module of claim 4, wherein the first side has three tabs spaced apart for receiving a first support and a second support therebetween.

7. The module of claim 4, wherein the one or more tabs project from a lower surface of the module.

8. The module of claim 4, wherein the one or more tabs comprise a tip opposite the first side with a lip for securing the mounting bar or the second solar module.

9. The module of claim 4, wherein the mounting element comprises a slot or a plurality of holes formed in the second side.

10. A solar assembly for mounting to a structure, the assembly comprising:
at least one support for affixing to the structure;
at least one mounting bar affixed to the at least one support;
a first solar module with a first side comprising one or more tabs engaging the at least one mounting bar and a second side comprising at least one mounting element for receiving an anchor; and
at least one anchor attaching each mounting element of the first solar module to the at least one support.

11. The solar assembly of claim 10, further comprising a second solar module with a first side comprising one or more tabs engaging the second side of the first solar module and a second side comprising at least one mounting element for receiving an anchor; and
at least one anchor attaching each mounting element of the second solar module to the at least one support.

12. The assembly of claim 11, wherein the second solar module comprises at least one guide aligning the second solar module with respect to the first solar module.

13. The assembly of claim 11, further comprising at least one additional solar module disposed with respect to the second solar module with a first side comprising one or more tabs engaging a second side of an adjacent solar module and a second side comprising at least one mounting element for receiving an anchor; and
at least one anchor attaching each mounting element of each additional solar module to the at least one support.

14. The assembly of claim 11, wherein each solar module detaches from an adjacent module or the at least one mounting bar and does not require disturbing a position of the adjacent module.

15. The assembly of claim 14, wherein each solar module attaches to the at least one support with no more than two anchors.

16. A method of mounting an array of solar modules to a structure, the method comprising:
attaching at least one support to the structure;
attaching at least one mounting bar to the at least one support;
engaging at least one tab from a first side of a first solar module with the at least one mounting bar;
attaching a second side of the first solar module to the at least one support by at least one anchor with a mounting element in the second side;
engaging at least one tab from a first side of a second solar module with the second side of the first solar module; and
attaching a second side of the second solar module to the at least one support by at least one anchor with a mounting element in the second side.

17. The method of claim 16, further comprising engaging at least one tab from a first side of at least one additional solar module with a second side of an adjacent solar module and attaching a second side of the at least one additional solar module by at least one anchor to the at least one support with a mounting element in the second side.

18. The method of claim 16, further comprising aligning the second solar module with the second side of the first solar module by at least one guide on the second side of the first solar module.

19. The method of claim 16, further comprising staging one or more modules on the at least one support.

20. The method of claim 17, further comprising removing a solar module without requiring disturbing a position of the adjacent solar module.
